**Europäisches Patentamt**

**European Patent Office**

**Office européen des brevets**

(11) Veröffentlichungsnummer: **0 023 281**
**B1**

(12) **EUROPÄISCHE PATENTSCHRIFT**

(45) Veröffentlichungstag der Patentschrift:
**25.01.84**

(21) Anmeldenummer: **80103770.6**

(22) Anmeldetag: **02.07.80**

(51) Int. Cl.³: **G 01 D 7/00,** G 01 D 13/00,
G 02 F 1/13

(54) **Anzeigevorrichtung.**

(30) Priorität: **27.07.79 DE 2930507**

(43) Veröffentlichungstag der Anmeldung:
**04.02.81 Patentblatt 81/5**

(45) Bekanntmachung des Hinweises auf die Patenterteilung:
**25.01.84 Patentblatt 84/4**

(84) Benannte Vertragsstaaten:
**FR GB IT**

(56) Entgegenhaltungen:
**CH - A - 490 721**
**DE - A - 2 756 048**
**US - A - 3 736 047**
**US - A - 3 832 034**

(73) Patentinhaber: **Licentia Patent-Verwaltungs-GmbH,
Theodor-Stern-Kai 1, D-6000 Frankfurt/Main 70 (DE)**

(72) Erfinder: **Gerstner, Dieter, Dr.-Ing, Lämmlestrasse 15,
D-7100 Heilbronn (DE)**

(74) Vertreter: **Langer, Karl-Heinz, Dipl.-Ing. et al, Licentia
Patent-Verwaltungs-GmbH, Theodor-Stern-Kai 1,
D-6000 Frankfurt/Main 70 (DE)**

ACTORUM AG

## Anzeigevorrichtung

Die Erfindung betrifft eine Anzeigevorrichtung nach dem Oberbegriff des Patentanspruchs 1. Eine derartige Anzeigevorrichtung ist aus der DE-A-2 756 048 bekannt.

Flüssigkristallanzeigevorrichtungen allgemeiner Art sind z.B. aus US-A-3 736 047 und US-A-3 832 034 bekannt, wobei die Elektrodenanordnungen in den aktivierbaren Bereichen im nicht aktivierten Zustand nicht sichtbar sind.

Bei elektronischen Geräten und Maschinen mit elektronischer Steuerung besteht ein zunehmender Bedarf an elektronischen Anzeigeeinheiten für die Mensch-Maschinen-Kommunikation.

Die Anzeigeeinheiten sollen den Menschen über Betriebszustand, Rechenergebnisse, Fehler u.a. informieren. Als typische Einsatzfelder können gelten: Rechenmaschinen, Kopiergeräte, aber auch zukünftige Kraftfahrzeuge oder Waschautomaten mit elektronischer Steuerung.

Hierbei werden sehr oft Ziffernanzeigen, jedoch zunehmend auch andere Displayformate, z.B. elektronische «Zeiger», etwa in Form von geraden oder als Kreisbogen ausgeführten Linearskalen sowie bestimmten Symbole verlangt. Um die Anzeigen auch für ungeübte Benutzer bequem und fehlerfrei ablesbar zu machen, werden hierbei häufig weitere Klartext-Buchstaben, Eichmarken und feststehende Ziffern als unveränderliche Information auf die Anzeige-Einheit gedruckt.

Für derartige Anzeigen mit verschiedenen Anzeige-Formaten auf demselben Display hat sich der Ausdruck Multifunktionsanzeigen eingeführt.

Der Erfindung liegt die Aufgabe zugrunde, die Lesbarkeit oder Erkennbarkeit solcher Anzeigevorrichtungen auch bei sehr stark wechselnden Lichtbedingungen zu verbessern.

Diese Aufgabe wird durch die im Patentanspruch 1 angegebene Erfindung gelöst. Vorteilhafte Ausgestaltungen der Erfindung gehen aus den Unteransprüchen hervor.

Die Erfindung wird nachfolgend unter Bezug auf die Zeichnung näher erläutert. Dabei zeigt:

Fig. 1 das Sichtfeld einer Anzeigevorrichtung;

Fig. 2 in einem Diagramm die Rückstrahlcharakteristik einer weissen, ideal diffus reflektierenden Oberfläche;

Fig. 3 die Rückstrahlcharakteristik einer dunklen, ideal diffus reflektierenden Oberfläche;

Fig. 4 die Rückstrahlcharakteristik eines aktivierten bzw. mit elektronischen Mitteln veränderten Flächenbereichs der Anzeigevorrichtung;

Fig. 5 die Rückstrahlcharakteristik eines nicht aktivierten Flächenbereichs der Anzeigevorrichtung.

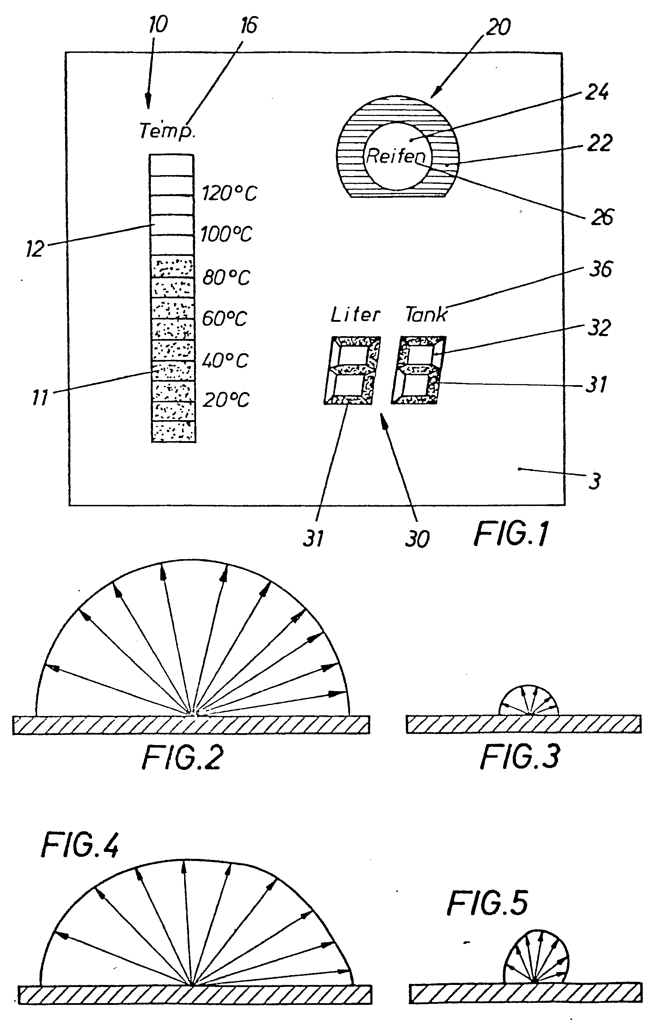

Fig. 1 zeigt das Sichtfeld einer Anzeigevorrichtung, die beispielsweise in einem Kraftfahrzeug dem Kraftfahrer Informationen über den Betriebszustand des Fahrzeugs vermittelt. Die Anzeigevorrichtung umfasst einen ersten Anzeigebereich 10, der beispielsweise Informationen über die Temperatur des Kühlwassers vermittelt; einen zweiten Anzeigebereich 20, der den Reifenzustand angibt; einen dritten Anzeigebereich 30, der über den noch im Tank vorhandenen Kraftstoff-Vorrat informiert. Innerhalb jedes dieser Anzeigebereiche 10, 20, 30 ist eine erste Art von Flächenbereichen vorgesehen, die hinsichtlich ihrer optischen Eigenschaften, beispielsweise ihrer Lichtdurchlässigkeit oder Reflexion, mit elektronischen Mitteln veränderbar bzw. aktivierbar sind, sowie eine zweite Art von Flächenbereichen, die hinsichtlich ihrer optischen Eigenschaften nicht mit elektronischen Mitteln veränderbar sind und die helle und dunkle und/oder auch farbige Bereiche umfassen. Zu den nicht elektronisch aktivierbaren Flächenbereichen in den Anzeigebereichen 10, 20, 30 zählen beispielsweise die dort jeweils angebrachten Schriftzüge Temp., Reifen, Liter, Tank sowie die Gradeinteilung in dem die Temperatur des Kühlwassers anzeigenden Anzeigebereich 10. Diese elektronisch nicht aktivierbaren Flächenbereiche der Anzeigevorrichtung werden zweckmässig so ausgestaltet, dass beispielsweise der Schriftzug 26 im Anzeigebereich 20 dunkel auf einem hellen Hintergrund 24 erscheint und dass die Schriftzüge 16 und 36 in den Anzeigebereichen 10 und 30 sowie die Gradeinteilung im Anzeigebereich 10 hell auf dunklem Hintergrund 3 ausgebildet sind.

Die Anzeigebereiche 10, 20, 30 umfassen zusätzlich Flächenbereiche, die hinsichtlich ihrer optischen Eigenschaften elektronisch veränderbar sind. So umfasst der Anzeigebereich eine aus Segmenten bestehende Balkendarstellung. Ein Teil der Segmente 11 ist zur Anzeige einer Temperatur von 90° mit elektronischen Mitteln aktiviert. Die restlichen Segmente 12 der Balkendarstellung sind nicht aktiviert.

Im Anzeigebereich 20 ist der zentrale Bereich 24, der selbst hell ausgebildet ist und dunklen Schriftzug 26 trägt, von einem im wesentlichen kreisförmig ausgebildeten, mit elektronischen Mitteln aktivierbaren Flächenbereich 22 umgeben.

Der Anzeigebereich 30 enthält über den unveränderbaren Schriftzug 36 hinaus eine aus elektronisch aktivierbaren Segmenten bestehende dreistellige Ziffernanzeige. Im dargestellten Ausführungsbeispiel zeigt die Ziffernanzeige aktivierte Segmente 31 und nicht aktivierte Segmente 32 derart, dass die Ziffer 35 angezeigt wird.

Dabei sind die dunklen Bereiche, also beispielsweise die Bereiche 3 sowie der Schriftzug 26 der nicht aktivierbaren Flächenbereiche, nicht völlig schwarz, also nicht 100%ig absorbierend ausgebildet. Auch sind die hellen Bereiche der Anzeigevorrichtung, also beispielsweise die Schriftzüge 16, 36 und die Temperaturskala im Anzeigebereich 10, nicht rein weiss, d.h. nicht sehr stark diffus reflektierend ausgebildet.

Gemäss der Erfindung trägt es nun zur Verbesserung der Sichtbarkeit wesentlich bei, wenn die Restreflexion der dunklen Bereiche der Anzeigevorrichtung, die elektronisch nicht veränderbar bzw. aktivierbar sind, beispielsweise handelt es sich hier um den Schriftzug 26 im Anzeigebereich 20, gleich ist der Restreflexion der nicht aktivierten Flächenbereiche, also beispielsweise der nicht aktivierten Segmente 12 im Anzeigebereich 10 sowie des nicht aktivierten kreisringförmigen Bereichs 22 im Anzeigebereich 20 sowie der nicht aktivierten Segmente der Zifferndarstellung im Anzeigebereich 30 und wenn weiterhin die Restreflexion der hellen Flächenbereiche der Anzeigevorrichtung, das sind also beispielsweise die Schriftzüge 16, 36 sowie die Gradeinteilung im Anzeigebereich 10 und die zentrale Fläche 24 im Anzeigebereich 20, gleich ist der Reflexion der aktivierten Flächenbereiche der Anzeigevorrichtung, das sind beispielsweise die aktivierten Segmente 11 im Anzeigebereich 10 sowie die aktivierten Segmente 31 im Anzeigebereich 30.

Gemäss einer Weiterbildung der Erfindung sollte die Reflexionsfarbe der dunklen Flächenbereiche, also jener, die vorstehend näher bezeichnet wurden, gleich der Restreflexionsfarbe der nicht aktivierten Flächenbereiche der Anzeigevorrichtung sein.

Besonders günstige Sichtbarkeitsverhältnisse ergeben sich, wenn die Restreflexion der dunklen Flächenbereiche der Anzeigevorrichtung etwa 3% der Reflexion eines ideal weissen Diffusors beträgt. Die Rückstrahlcharakteristik eines ideal weissen Diffusors ist beispielsweise lediglich für eine Ebene des Halbraums in Fig. 2 schematisch dargestellt. Die Länge der Pfeile entspricht der in einer bestimmten Entfernung vor der reflektierenden Oberfläche gemessenen Leuchtdichte. diese ist also in diesem Fall, gleiche Entfernung von der reflektierenden Oberfläche vorausgesetzt, an allen Punkten des Halbraums gleich gross.

Ebenso ergeben sich besonders günstige Sichtbarkeitsverhältnisse, wenn die Reflexion der vorstehend näher bezeichneten hellen Bereiche der Anzeigevorrichtung etwa 40% der Reflexion eines ideal weissen Diffusors beträgt. Auch ist es zweckmässig, wenn die Farbe der hellen Bereiche der Anzeigevorrichtung gleich ist der Reflexionsfarbe der aktivierten Flächenbereiche der Anzeigevorrichtung.

Für die Ablesbarkeit der Anzeigevorrichtung ist es weiterhin förderlich, wenn die Winkelcharakteristik der Reflexion der hellen und dunklen Flächen eine bestimmte Vorzugsrichtung aufweist, also nicht rein diffus ist. Die gewünschte Winkelcharakteristik der Reflexion der hellen bzw. dunklen Flächenbereiche der Anzeigevorrichtung wird zweckmässig beispielsweise durch reflektierende Metall- oder Glaspartikel eingestellt, die entweder auf den betreffenden Flächenbereichen der Anzeigevorrichtung aufgebracht oder auch etwa in der Sichtfläche selbst angeordnet werden.

Die Reflexionscharakteristik eines aktivierten Flächenbereichs der Anzeigevorrichtung ist in Fig. 4, die eines nicht aktivierten Flächenbereichs in Fig. 5 dargestellt.

Die Länge der Pfeile entspricht wiederum dem jeweiligen Wert der Leuchtdichte.

Für bestimmte Anwendungsfälle ist es zweckmässig, die Anzeigevorrichtung von der Rückseite her beleuchtbar auszubilden. Bei einem solchen Ausführungsbeispiel der Erfindung ist die gesamte Sichtfläche der Anzeigevorrichtung sowohl in ihren hellen als auch in ihren dunklen Flächenbereichen für das von der Rückseite her einfallende Licht teildurchlässig auszubilden. Dabei werden besonders günstige Sichtbarkeitsbedingungen geschaffen, wenn bei den dunklen Flächenbereichen der Anzeigevorrichtung der Transmissionsgrad für das von der Rückseite auffallende Licht der Restreflexion der nicht aktivierten Flächenbereiche der Anzeigevorrichtung entspricht, und wenn bei den hellen Flächenbereichen der Anzeigevorrichtung der Transmissionsgrad für das von der Rückseite auftreffende Licht gleich ist der Reflexion der aktivierten Flächenbereiche der Anzeigevorrichtung. Dabei ist es besonders zweckmässig, wenn die Winkelcharakteristik des durch die hellen Zonen der Anzeigevorrichtung von der Rückseite her hindurchtretenden Lichts gleich ist der Winkelcharakteristik der aktivierten Flächenbereiche, und wenn die Winkelcharakteristik des von der Rückseite der Anzeigevorrichtung durch die dunklen Zonen hindurchtretenden Lichts gleich ist der Winkelcharakteristik der nicht aktivierten Flächenbereiche der Anzeigevorrichtung. Um dieses zu erreichen, wird zweckmässig unter den hellen und/oder auch den dunklen Flächenbereichen der Anzeigevorrichtung eine teildurchlässige metallisch spiegelnde Schicht angeordnet. Weiterhin werden zumindest in den dunklen bzw. farbigen Flächenbereichen der Anzeigevorrichtung die die Färbung bewirkenden Farbpigmente in einem feinen Punkt- bzw. Strichraster derart aufgebracht, dass innerhalb jener Flächenbereiche metallisch reflektierende und mehr oder weniger absorbierende Flächenelemente miteinander abwechseln. Weiterhin kann die metallisch spiegelnde Schicht ebenfalls rasterförmig in der Weise ausgebildet sein, dass in regelmässiger Anordnung sich an Flächenbereiche mit einem relativ hohen Transmissionsgrad Flächenbereiche mit einem hohen Reflexionsgrad anschliessen.

Die elektronisch aktivierbaren Bereiche der Anzeigevorrichtung werden zweckmässig als an sich bekannte nach dem dynamischen Streuprinzip arbeitende Flüssigkristallzellen ausgebildet.

**Patentansprüche**

1. Anzeigevorrichtung mit Flächenbereichen, die hinsichtlich ihrer optischen Eigenschaften, beispielsweise ihrer Lichtdurchlässigkeit oder Reflexion, mit elektronischen Mitteln veränderbar bzw. aktivierbar sind, sowie mit hinsichtlich ihrer optischen Eigenschaften nicht veränderbaren Flächenbereichen, die helle und dunkle und/oder auch farbige Bereiche umfassen, wobei die dunklen Bereiche der nicht aktivierbaren Flächenbereiche nicht völlig schwarz, also nicht 100%ig absorbierend und die hellen Bereiche der nicht aktivierbaren Flächenbereiche nicht rein weiss, d.h. nicht sehr stark diffus reflektierend, ausgebildet sind, dadurch gekennzeichnet, dass die Restreflexion der dunklen Bereiche gleich der Restreflexion der nicht aktivierten Flächenbereiche und die Restreflexion der hellen Flächenbereiche gleich der Reflexion der aktivierten Flächenbereiche der Anzeigevorrichtung ist.

2. Anzeigevorrichtung nach Anspruch 1, dadurch gekennzeichnet, dass die Reflexionsfarbe der dunklen Flächenbereiche gleich ist der Restreflexionsfarbe der nicht aktivierten Flächenbereiche.

3. Anzeigevorrichtung nach Anspruch 2, dadurch gekennzeichnet, dass die Restreflexion der dunklen Flächenbereiche etwa 3% der Reflexion eines ideal weissen Diffusors beträgt.

4. Anzeigevorrichtung nach einem der Ansprüche 1 bis 3, dadurch gekennzeichnet, dass die Reflexion der hellen Bereiche etwa 40% der Reflexion eines ideal weissen Diffusors beträgt.

5. Anzeigevorrichtung nach einem der Ansprüche 1 bis 4, dadurch gekennzeichnet, dass die Farbe der hellen Flächen gleich der Reflexionsfarbe der aktivierten Flächenbereiche der Anzeigevorrichtung ist.

6. Anzeigevorrichtung nach den Ansprüchen 1 bis 5, dadurch gekennzeichnet, dass die Winkelcharakteristik der Reflexion der hellen und dunklen Flächen der Anzeigevorrichtung eine Vorzugsrichtung aufweist, also nicht rein diffus ist.

7. Anzeigevorrichtung nach Anspruch 6, dadurch gekennzeichnet, dass die Winkelcharakteristik der Reflexion der hellen bzw. dunklen Flächenbereiche der Anzeigevorrichtung vermittels an diesen Flächenbereichen aufgebrachten reflektierenden Metall- oder Glaspartikeln eingestellt ist.

8. Anzeigevorrichtung nach einem der Ansprüche 1 bis 7, dadurch gekennzeichnet, dass die Sichtfläche der Anzeigevorrichtung sowohl in ihren hellen als auch in ihren dunklen Flächenbereichen für von der Rückseite einfallendes Licht teildurchlässig ist.

9. Anzeigevorrichtung nach den Ansprüchen 1 bis 8, dadurch gekennzeichnet, dass bei den dunklen Flächenbereichen der Anzeigevorrichtung der Transmissionsgrad für von der Rückseite auffallendes Licht der Restreflexion der nicht aktivierten Flächenbereiche entspricht und dass bei den hellen Flächenbereichen der Anzeigevorrichtung der Transmissionsgrad für von der Rückseite auftreffendes Licht gleich ist der Transmission der aktivierten Flächenbereiche.

10. Anzeigevorrichtung nach den Ansprüchen 1 bis 9, dadurch gekennzeichnet, dass die Winkelcharakteristik des durch die hellen Zonen der Anzeigevorrichtung von der Rückseite her hindurchtretenden Lichts gleich ist der Winkelcharakteristik der aktivierten Flächenbereiche, und dass die Winkelcharakteristik des von der Rückseite der Anzeigevorrichtung durch die dunklen Zonen hindurchtretenden Lichts gleich ist der Winkelcharakteristik der nicht aktivierten Flächenbereiche der Anzeigevorrichtung.

11. Anzeigevorrichtung nach den Ansprüchen 1 bis 10, dadurch gekennzeichnet, dass zur Einstellung einer bevorzugten Winkelcharakteristik und/ oder Restreflexion und Transmission unter den hellen und/oder dunklen Flächenbereichen der Anzeigevorrichtung eine teildurchlässige, metallisch spiegelnde Schicht angeordnet ist und dass zumindest in den dunklen bzw. farbigen Flächenbereichen der Anzeigevorrichtung die die Färbung bewirkenden Farbpigmente in einem feinen Punkt- bzw. Strichraster derart aufgebracht sind, dass innerhalb jener Flächenbereiche metallisch reflektierende und mehr oder weniger absorbierende Flächenelemente miteinander abwechseln.

12. Anzeigevorrichtung nach Anspruch 1, dadurch gekennzeichnet, dass die metallisch spiegelnde Schicht ebenfalls rasterförmig etwa in der Weise ausgebildet ist, dass in regelmässiger Anordnung sich an Flächenbereiche mit einem relativ hohen Transmissionsgrad Flächenbereiche mit einem hohen Reflexionsgrad anschliessen.

13. Anzeigevorrichtung nach den Anprsüchen 1 bis 12, dadurch gekennzeichnet, dass die elektronisch aktivierbaren Flächenbereiche der Anzeigevorrichtung als an sich bekannte, nach dem dynamischen Streuprinzip arbeitende Flüssigkristallzellen ausgebildet sind.

**Claims**

1. Indicating device with surface regions which in respect of their optical properties, for example their permeability by light or their reflectivity, are variable or activatable by electronic means, as well as with surface regions which are not variable in respect of their optical properties and comprise bright and dark and/or also coloured regions, wherein the dark ragions of the not activatable surface regions are formed to be not fully black, thus not 100% absorbent, and the bright regions of the not activatable surface regions are formed to be not purely white, i.e. not very strongly reflecting diffusely, characterised thereby, that the residual reflection of the dark regions is equal to the residual reflection of the activated surface regions and the residual reflection of the bright surface regions is equal to the reflection of the activated surface regions of the indicating device.

2. Indicating device according to claim 1, characterised thereby, that the reflection colour of the dark surface regions is equal to the residual reflection colour of the not activated surface regions.

3. Indicating device according to claim 2, characterised thereby, that the residual reflection of the dark surface regions amounts to about 3% of the reflection of an ideal white diffuser.

4. Indicating device according to one of the claims 1 to 3, characterised thereby, that the reflection of the bright regions amounts to about 40% of the reflection of an ideal white diffuser.

5. Indicating device according to one of the claims 1 to 4, characterised thereby, that the colour of the bright surfaces is equal to the reflection colour of the activated surface regions of the indicating device.

6. Indicating device according to the claims 1 to 5, characterised thereby, that the angular characteristic of the bright and dark surfaces of the indicating device displays a preferential direction, thus is not purely diffuse.

7. Indicating device according to claim 6, characterised thereby, that the angular characteristic of the reflection of the bright and dark surface regions of the indicating device respectively is set by means of reflecting metal or glass particles applied onto these surface regions.

8. Indicating device according to one of the claims 1 to 7, characterised thereby, that the viewed surface of the indicating device in its bright as well as also in its dark surface regions is partially permeable by light incident from the rear side.

9. Indicating device according to the claims 1 to 8, characterised thereby, that in the case of the dark surface regions of the indicating device, the transmission factor for light incident from the rear side corresponds to the residual reflection of the not activated surface regions and that in the case of the bright surface regions of the indicating device, the transmission factor for light incident from the rear side is equal to the transmission of the activated surface regions.

10. Indicating device according to the claims 1 to 9, characterised thereby, that the angular characteristic of the light passing from the rear side through the bright zones of the indicating device is equal to the angular characteristic of the activated surface regions and that the angular characteristic of the light passing from the rear side through the dark zones is equal to the angular characteristic of the not activated surface regions of the indicating device.

11. Indicating device according to the claims 1 to 10, characterised thereby, that a partially permeable, metalically reflecting layer is arranged below the bright and/or dark surface regions of the indicating device for the setting of a preferred angular characteristic and/or residual reflection and transmission and that at least in the dark or coloured surface regions of the indicating device, the colour pigments effect-ing the colouring are applied in a fine point or line raster in such a manner that metalically reflecting and more or less absorbing surface elements alternate one with the other in those surface regions.

12. Indicating device according to claim 11, characterised thereby, that the metalically reflecting layer is likewise formed in raster shape possibly in the manner that surface regions with a high reflection factor adjoin in regular arrangement at surface regions with a relatively high transmission factor.

13. Indicating device according to the claims 1 to 12, characterised thereby, that the electronically activatable surface regions of the indicating device are formed as in themselves known liquid crystal cells operating on the dynamic scatter principle.

**Revendications**

1. Dispositif d'affichage ou d'indication qui possède des zones de surface dont les propriétés optiques, telles que la transparence ou la réflexion, peuvent être modifiées ou activées par des moyens électroniques et des zones de surface claires et sombres et/ou de couleur, dont les propriétés optiques ne sont pas modifiables, les zones sombres n'étant pas complètement noires, c'est-à-dire pas absorbantes à 100%, et les zones claires n'étant pas parfaitement blanches, c'est-à-dire ne présentent pas une très forte réflexion diffuse, caractérisé en ce que la réflexion résiduelle des zones sombres égale la réflexion résiduelle des zones activables qui ne sont pas activées et la réflexion résiduelle des zones claires égale le réflexion des zones activées.

2. Dispositif selon la revendication 1, caractérisé en ce que la couleur réfléchie par les sombres est la même que la couleur de réflexion résiduelle des zones activables non activées.

3. Dispositif selon la revendication 2, caractérisé en ce que la réflexion résiduelle des zones sombres correspond à peu près à 3% de la réflexion d'un diffuseur blanc idéal.

4. Dispositif selon une des revendications 1 à 3, caractérisé en ce que la réflexion des zones claires correspond à peu près à 40% de la réflexion d'un diffuseur blanc idéal.

5. Dispositif selon une des revendications 1 à 4, caractérisé en ce que la couleur des zones claires est la même que la couleur réfléchie par les zones activées.

6. Dispositif selon les revendications 1 à 5, caractérisé en ce que la caractéristique angulaire de la réflexion des zones claires et des zones sombres présente une direction préférentielle, de sorte qu'il ne s'agit pas d'une réflexion diffuse pure.

7. Dispositif selon la revendication 6, caractérisé en ce que la caractéristique angulaire de la réflexion des zones claires respectivement des zones sombres est établie ou ajustée au moyen de particules métalliques ou de verre réfléchissantes appliquées sur lesdites zones.

8. Dispositif selon une des revendications 1 à 7, caractérisé en ce que le cadran ou autre surface d'indication du dispositif est partiellement translucide pour la lumière venant de l'arrière, tant dans ses zones sombres que dans ses zones claires.

9. Dispositif selon les revendications 1 à 8, caractérisé en ce que les zones sombres possèdent une transmittance, pour la lumière venant de l'arrière, qui correspond à la réflexion résiduelle des zones activables qui ne sont pas activées et en ce que les zones claires possèdent une transmittance, pour la lumière venant de l'arrière, qui est éale à la transmission des zones activées.

10. Dispositif selon les revendications 1 à 9, caractérisé en ce que la caractéristique angulaire de la lumière traversant les zones claires de l'arrière est égale à la caractéristique angulaire des zones activées et en ce que la caractéristique angulaire de la lumière traversant les zones sombres de l'arrière est égale à la caractéristique angulaire des zones activables qui ne sont pas activées.

11. Dispositif selon les revendications 1 à 10, caractérisé en ce que, pour établir une caractéristique angulaire et/ou une réflexion résiduelle et une transmission préférées, une couche partiellement translucide et à réflexion métallique est disposée sous les zones claires et/ou les zones sombres et en ce que, tout au moins dans les zones sombres respectivement de couleur, les pigments produisant la coloration sont appliqués suivant un fin réseau de points ou de traits, de manière que des éléments de surface à réflexion métallique alternent dans chacune desdites zones avec des éléments de surface plus ou moins absorbants.

12. Dispositif selon la revendication 11, caractérisé en ce que la couche à réflexion métallique est réalisée également sous forme d'un réseau, par exemple de manière que des portions de surface à transmittance relativement élevée se raccordent suivant une disposition régulière à des portions de surface à réflectance élevée.

13. Dispositif selon les revendications 1 à 12, caractérisé en ce que les zones électroniquement activables sont réalisées comme des cellules de critaux liquides travaillant selon le principe de dispersion dynamique, qui sont en soi connues.

FIG.1

FIG.2

FIG.3

FIG.4

FIG.5